Europäisches Patentamt

European Patent Office

Office européen des brevets

(19)

(11) **EP 0 627 993 B1**

(12) **EUROPÄISCHE PATENTSCHRIFT**

(45) Veröffentlichungstag und Bekanntmachung des Hinweises auf die Patenterteilung:
**10.02.1999 Patentblatt 1999/06**

(21) Anmeldenummer: **94900144.0**

(22) Anmeldetag: **13.11.1993**

(51) Int. Cl.$^6$: **B32B 31/00**, B29C 65/08, A61F 13/15

(86) Internationale Anmeldenummer:
**PCT/EP93/03187**

(87) Internationale Veröffentlichungsnummer:
**WO 94/11189 (26.05.1994 Gazette 1994/12)**

(54) **VERFAHREN UND VORRICHTUNG ZUR HERSTELLUNG EINER ELASTISCHEN, MEHRSCHICHTIGEN MATERIALBAHN**

PROCESS AND DEVICE FOR PRODUCING AN ELASTIC, MULTILAYER MATERIAL WEB

PROCEDE ET DISPOSITIF DE PRODUCTION D'UNE BANDE DE MATERIAU ELASTIQUE A COUCHES MULTIPLES

(84) Benannte Vertragsstaaten:
**AT BE CH DE DK ES FR GB GR IE IT LI NL PT SE**

(30) Priorität: **14.11.1992 DE 4238541**

(43) Veröffentlichungstag der Anmeldung:
**14.12.1994 Patentblatt 1994/50**

(73) Patentinhaber:
**AMOCO FABRICS
ZWEIGNIEDERLASSUNG DER AMOCO
DEUTSCHLAND GmbH
D-48599 Gronau (DE)**

(72) Erfinder: **BALDAUF, Georg**
**D-48366 Laer (DE)**

(74) Vertreter: **Barz, Peter, Dr.**
**Patentanwalt
Kaiserplatz 2
80803 München (DE)**

(56) Entgegenhaltungen:
EP-A- 0 092 866          EP-A- 0 134 887
EP-A- 0 242 480          EP-A- 0 256 509
EP-A- 0 274 752          WO-A-90/03464
BE-A-  398 308           DE-A- 1 808 286
US-A- 4 606 964          US-A- 4 692 368

**Beschreibung**

Die Erfindung betrifft ein Verfahren zur Herstellung einer elastischen, mehrschichtigen Materialbahn, die aus einer flexiblen, elastischen Trägerfolie aus einem thermoplastischen Elastomer und aus je einer auf der Ober- und Unterseite der Trägerfolie wellenförmig befestigten Vliesbahn besteht, wobei letztere miteinander verschweißt sind und die Schweißverbindungen über die Materialbahn verteilt sind und gleichzeitig Bereiche erhöhter Luftdurchlässigkeit ergeben,
mit folgenden Verfahrensschritten:

a) Heranführen und Strecken der Trägerfolie auf wenigstens (100 + a)% der ungestreckten Länge,
b) getrenntes Heranführen von zwei Vliesbahnen und Zusammenführen zu einer Sandwich-Anordnung, die aus mittenliegender Trägerfolie und außenliegenden Vliesbahnen besteht,
c) Verschweißen der Vliesbahnen mit der Trägerfolie mit Hilfe einer Schweißstacheln tragenden Walze als Teil einer Schweißstation,
d) Entspannen der Trägerfolie mit den aufgeschweißten Vliesbahnen nach Verlassen der Schweißstation.

(Hinweis: "100" bedeutet ungestreckte Länge).

Ein solches Verfahren wird beschrieben in BE-A-398308 und EP-A-274 752, insbesondere Figuren 16 bis 18 dieser Schrift. Elastische, mehrschichtige Materialbahnen, die als Laminate hergestellt werden, werden beispielsweise bei der Fabrikation von Windelhöschen als elastische Abschlußmanschetten eingesetzt. Das Laminat soll flüssigkeitsdicht, aber gasdurchlässig sein, so daß es angenehm zu tragen ist. Es soll textilartig in haptischer und optischer Hinsicht sein. Hierzu werden, wie bereits angedeutet, eine flexible Trägerfolie, die flüssigkeitsundurchlässig und nicht selbstklebend sein soll, mit entsprechenden Vliesbahnen wellenförmig verbunden. Hierbei wird im allgemeinen ein autogener Schweißvorgang angewandt, beispielsweise Ultraschall- oder Wärmeverschweißung.

Bei dem bekannten Verfahren werden die Schweißpunkte gleichzeitig als Perforationen ausgebildet, die dazu dienen, eine Ventilation zu ermöglichen.

Das Verschweißen erfolgt bei gestreckter oder teilgestreckter Trägerfolie, wobei das Strecken bereits vor dem Eintritt in die Schweißstation geschieht. Werden die Vliesbahnen dann ungestreckt oder weniger gestreckt als die Trägerfolie auf letztere aufgelegt, so wellen sie sich, wenn nach Durchlaufen der Schweißstation die Trägerfolie wieder entspannt wird. Es werden demnach alle drei Lagen verschweißt, wobei Löcher entstehen, an deren Rändern das Material zusammengeschmolzen ist.

In dem vorgenannten Stand der Technik sind geeignete Materialkombinationen genannt. Derartige Materialien - thermoplastische Elastomere - eignen sich auch für den hier vorliegenden Fall. Insbesondere ist die Trägerfolie aus gemischtem PE/PE-Copolymerisat hergestellt. Es eignen sich jedoch auch andere Materialien, beispielsweise Block-Copolymere des Typs A-B-A'.

Als nachteilig bei der bekannten Materialbahn wird empfunden, daß bei Streckung im Gebrauchsfalle sich auch die auf der Ober- und Unterseite der Trägerfolie befindenden, wellenförmig (creppartig) befestigten Vliesbahnen strecken, so daß der textilartige Eindruck der Materialbahn verloren geht. Außerdem kommt es zur Bildung unerwünscht großer Perforationen.

Es stellt sich die Aufgabe, ein Verfahren zur Herstellung einer elastischen mehrschichtigen Materialbahn anzugeben, die ein Produkt ergibt, das auch bei Streckung bis an die Elastizitätsgrenze noch ein textilartiges Aussehen in gewünschter, flauschiger Form beibehält.

Diese Aufgabe wird gelöst durch ein Verfahren der eingangs genannten Art, das dadurch gekennzeichnet ist, daß die beiden Vliesbahnen zunächst herangeführt und anschließend gestreckt werden auf ein Maß (100 + b)% bzw. (100 + c)% unter Einhaltung folgender Ungleichung:

$$b < c < a$$

wobei die Unterschiede der Streckungsmaße (von Trägerfolie und Vlies 1 und Vlies 2) groß genug sind, um eine Wellen- oder Crepplage einer Vliesbahn zu erzeugen. Anschließend werden die eingangs genannten Schritte b) und c) durchgeführt, wobei in Schritt c) gitterartig angeordnete Punktschweißflächen (22) gebildet werden.

Bei dem neuen Verfahren werden demnach das Ober- und das Untervlies mit verschiedenen Streckungen herangeführt. Vorzugsweise bleibt die eine Vliesbahn völlig ungestreckt, während die andere eine Vorstreckung erfährt, die etwa der halben Streckung entspricht, die auf die Trägerfolie angewandt wird, d. h. $a \approx 2\,c$. Im entspannten Zustand hat das Material das bekannte, flauschige, gekreppte Aussehen bekannter Laminat-Gewebebahnen. Wird es bis zu dem Punkt gestreckt, daß die am stärksten vorgestreckte Vliesbahn flach auf der Trägerbahn liegt, so hat die andere Vliesbahn immer noch genügend Speicherlänge in den Bögen, um noch als ausreichend flauschig zu erscheinen.

Eine Perforation des gesamten Verbundes wird nicht durchgeführt, sondern eine elastische Folie wird gedehnt zwischen zwei unter geringer Spannung gehaltenen Vliesstoffbahnen gebracht. Die drei zusammengeführten Lagen werden an vielen kleinen Punkten verschweißt. Die Verschweißung findet ausschließlich zwischen den Vliesstoffbahnen statt. Die elastische Folie wird im Moment der Energieeinleitung an den Schweißpunkten zerstört, bildet durch die anliegende Zugspannung sich vergrößernde Perforationen aus und nimmt an der Verschweißung nicht teil. Das Fertigprodukt besteht dann aus zwei miteinander verbundenen Vliesstoffbahnen und dazwischenliegender perforierter elastischer Folie, die mechanisch durch die nun gebildeten Verbindungspunkte (Gitterpunkte) gehalten wird.

Vorzugsweise werden folgende Streckungswerte gewählt: b zwischen 0 und 2; c zwischen 3 und 20 (z.B. 5); a zwischen 20 und 100, vorzugsweise zwischen 40 und 100.

Eine weitere Problemstellung bei der hier vorgestellten Laminatbindung ist, daß bei einer Gewebebahn, die nach dem bekannten Verfahren hergestellt ist, sich zwar eine ausreichende Ventilation durch die Perforationen ergibt, dies jedoch den Nachteil hat, daß die Laminat-Gewebebahn so luftdurchlässig ist, daß sie von Unterdruck arbeitenden Greifapparaturen nicht mehr gehalten wird. Es stellt sich also das Problem, die genannten Materialbahnen abschnittsweise für Vakuum-Handling-Apparaturen verarbeitbar zu machen. Das Verschweißen der Vliesbahnen mit der Trägerfolie, was üblicherweise mit Hilfe von punktweise arbeitenden Schweißvorrichtungen unter Ausnutzung von Ultraschall-Schweißvorgängen geschieht, müßte demnach so gestaltet werden, daß auf der einen Seite eine ausreichende Haftfestigkeit der Vliesbahnen an der Trägerfolie, zum anderen eine ausreichende physiologisch erforderliche Ventilation gegeben ist und zum dritten das Material trotzdem mit Unterdruck-Apparaturen verarbeitbar bleibt.

Zur Lösung dieser Teilaufgabe wird vorgeschlagen, daß im Bereich der Punktschweißflächen lediglich eine Ausdünnung der Trägerfolie unter Beibehaltung der Substanz der Vliesbahn erfolgt. Es wird demnach nicht mehr perforiert, sondern lediglich mit relativ feinen Punktschweißstacheln ein Auseinanderfließen der Folie und Aufeinanderdrücken der Vliesbahnen auf der Ober- und Unterseite erreicht, wobei auf den ersten Blick scheinbare Perforationen vorhanden sind. Diese sind jedoch durch sehr feine, siebartige Vliesbereiche verschlossen.

Erfindungswesentlich, auch für sich allein genommen, ist daher die besondere Ausbildung sowohl der Punktschweißflächen als auch der zur Herstellung der Punktschweißflächen verwendeten Vorrichtung. Vorzugsweise wird eine Verschweißung so vorgenommen, daß die Summen der Schweißflächen sich zur gestreckten Fläche der Trägerfolie sich wie 0,5 bis 5 : 100 verhalten.

Eine Vorrichtung zur Durchführung des Verfahrens ist mit Vorratsrollen, Reckwerken, einer Schweißstation und nachgeschalteten Aufnahmerollen versehen, bei der die Schweißstation mit einer Schweißstacheln tragenden Walze und Gegendruckelemente ausgestattet ist, über die die Bahn führbar ist. Die äußere Kontaktfläche der Schweißstacheln macht 0,5 bis 5 % der Gesamtperipheriefläche der Walze aus. Vorzugsweise stellen die Schweißstacheln Kegelstümpfe dar, deren Kegel-Neigungswinkel zwischen 40 bis 70°, vorzugsweise 60°, betragen. Die äußere Kontaktfläche der Schweißstacheln ist vorzugsweise von einem quadratischen, vorzugsweise im Eckbereich abgerundeten Umriß.

Entsprechend der Schweißflächen ergeben sich zur Laufrichtung der Materialbahn Frontlinien, die von entsprechenden Frontlinien von Schweißstacheln erzeugt werden. Es hat sich gezeigt, daß bei einer leichten Schräge dieser Frontlinie, d. h. bei einer Abweichung von 1 bis 5° vom rechten Winkel, den die Laufrichtung der Materialbahn zur Frontlinie hat, ein optimales Haftungsergebnis erzielbar ist. Die Materialbahn wird dadurch in Querrichtung breitgestreckt. Resonanzeffekte zwischen der zur Schweißstation gehörenden Sonotrode und Materialbahn (Ware) werden verhindert. Es ergeben sich höhere Produktionsgeschwindigkeiten.

Weiterhin ist vorteilhaft, wenn die äußere, plane Kontaktfläche eines Schweißstachels wesentlich kleiner gehalten wird als die bekannte Größe der Perforationen bei derartigen Laminat-Gewebebahnen. Hier wird die Größe zwischen 0,2 bis 0,6 mm$^2$ gewählt.

Auch ist vorteilhaft, wenn pro 10 cm Materialbahnbreite 15 bis 40 Schweißstacheln, die eine entsprechende Anzahl von Schweißflächen ergeben, in einer Frontlinie liegen. Vorzugsweise sollte bei einer Breite von 50 mm einer Bahn 12 bis 16 Schweißflächen vorhanden sein.

Der Abstand der Frontlinien liegt zwischen 7 bis 10 mm; 8 mm haben sich als optimal ergeben. Wie an sich bekannt, sollte die Anordnung der Schweißstacheln von Frontlinie zu Frontlinie so sein, daß sie gegeneinander versetzt angeordnet sind.

Das sich ergebende Produkt, die Laminat-Gewebebahn, besitzt demnach in der Mitte eine Trägerfolie aus beispielsweise 0,02 bis 0,06 mm starker TPE-Folie, auf die gecreppt, in Wellenform liegend, eine aus Vliesbahnen gelegte weitere Schicht aufgebracht ist. Als Vliesmaterial eignet sich beispielsweise ein extrudierbares Polyolefin, beispielsweise Polypropylen, das in den üblichen Vlies-Herstellungsverfahren, als kardiertes Faservlies, Spinnvlies, Meltblown-Vlies oder in Kombination derartiger Verfahrensschritte hergestellt worden ist. Darüberhinaus kann das Vlies chemisch, mechanisch oder thermisch verfestigt sein.

Ein Ausführungsbeispiel des Verfahrens und des erhaltenen Produkts wird anhand der Zeichnung erläutert. Die Figuren der Zeichnung zeigen im einzelnen:

Figur 1    in schematischer Seitenansicht eine Vorrichtung zur Herstellung einer laminierten Materialbahn gemäß Erfindung;

Figur 2    das Material in ungestreckter Form;

Figur 3    das Material in gestreckter Form;

Figur 4     das Material in Draufsicht (etwa natürliche Größe),

Figur 5     in vergrößerter Ansicht ein Detail der Stachelwalzen-Oberfläche;

Figur 6     einen Teil der Oberfläche der Stachelwalze;

Figur 7     die Schweißstachel im Schnitt;

Figur 8     den Prägebereich eines Schweißstachels.

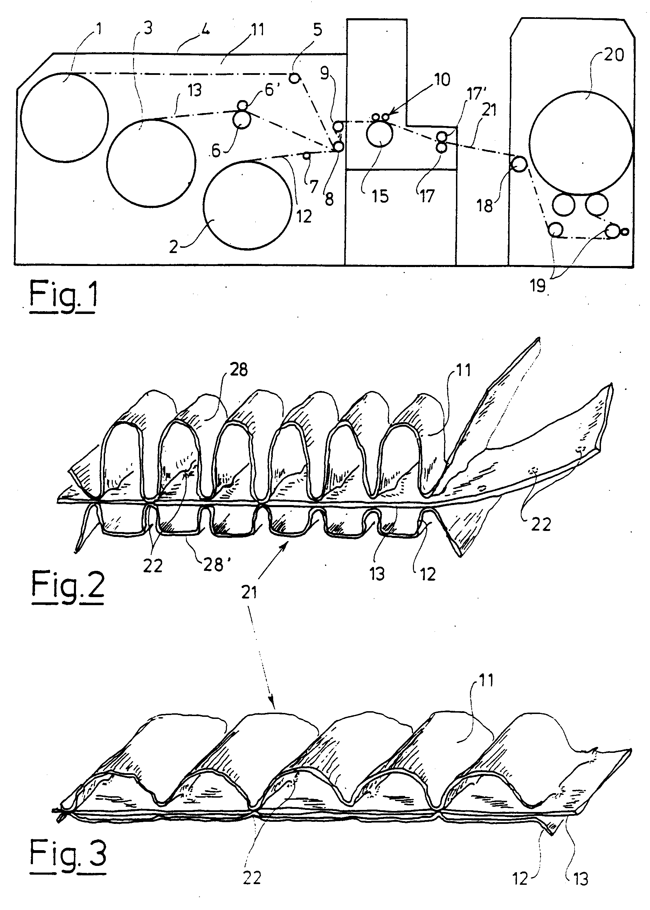

In der Figur 1 ist in schematischer Darstellung eine Vorrichtung zur Herstellung einer elastischen, mehrschichtigen Materialbahn 21 dargestellt. Die Materialbahn 21 setzt sich zusammen aus einer flexiblen Trägerfolie 13 und aus je einer auf der Ober- und Unterseite der Trägerfolie wellenförmig befestigten Vliesbahn 11 bzw. 12. Die Vliesbahnen 11 und 12 sind zunächst völlig ungewellt, auch nicht eingeprägt oder speziell vorbehandelt. Dabei hat im ungestreckten Zustand die Vliesbahn etwa eine Dicke von 0,1 bis 0,5 mm. Es handelt sich beispielsweise um Spinnvlies, wie es nach dem Stand der Technik bekannt ist. Auf einer Vorratsrolle 1 befindet sich ein Vorrat der Vliesbahn 11. Diese wird ohne zusätzliche Spannung, d. h. nur unter der erforderlichen Zugspannung über eine Umlenkrolle 5 an eine Führungsrolle 8 herangeführt. Eine zweite Vorratsrolle 2 trägt eine Vliesbahn 12 derselben oder ähnlichen Qualität, die jedoch über eine Stützrolle 7 bzw. über (nicht dargestellte) Reckwerke vorgespannt wird und damit gegenüber der ursprünglichen Länge 100 eine Länge 100 + c bekommt.

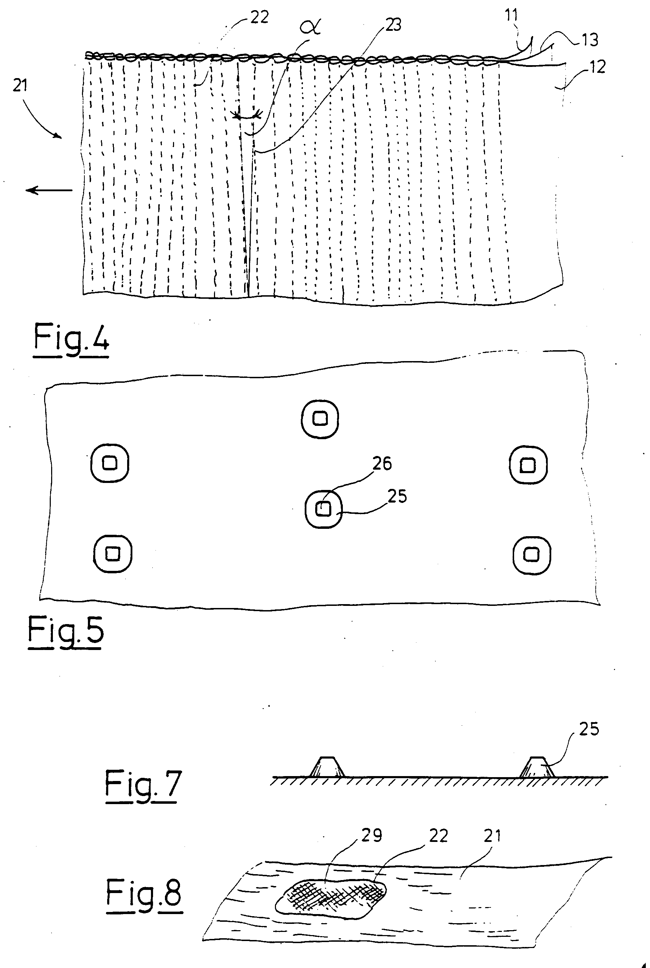

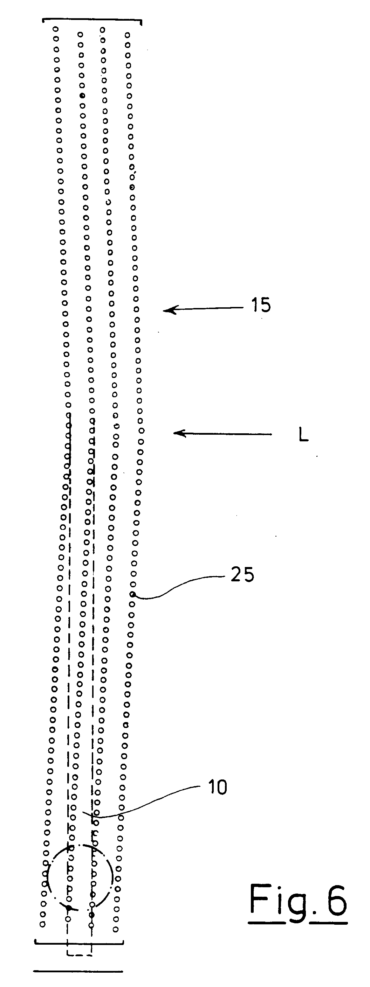

Weiterhin ist eine dritte Vorratsrolle 3 vorhanden, auf der sich eine gummielastische Trägerfolie 13 z.B. TPE-(= thermoplastische Elastomere) Folie, befindet. Hierbei handelt es sich beispielsweise um eine nicht-selbstklebende, ca. 0,04 mm starke Folie aus SEBS-Material. Das Folienmaterial besitzt keine vorgegebenen Perforationen oder Verbindungsstellen. Über ein Reckwerk, das im wesentlichen aus zwei Walzen 6, 6' besteht, wird die Trägerfolie 13 gereckt, und zwar auf eine Länge von ursprünglich 100 auf 100 + a. Diese Reckung bleibt während der folgenden Arbeitsgänge zunächst erhalten. Die drei Folien 11, 12, und 13 werden an der Führungsrolle 8 zu einer Sandwichanordnung zusammengeführt, über die Umlenkrolle 9 gezogen und gelangen in die Schweißstation 10. Dort befindet sich eine Schweiß-Stachelwalze 15 und eine Gegenelektrode (Sonotrode) 10. Wie noch beschrieben werden wird, besitzt die Walze 15 zahlreiche Schweißstacheln 25, die die gereckte, flach liegende Sandwichanordnung der drei Folien 11, 12, 13 mit Hilfe einer UHF-Schweißung miteinander verbinden. Dabei drükken die äußeren Kontaktflächen der Schweißstacheln, die eine quadratisch-abgerundete Flächenform haben, das Vliesmaterial aufeinander und auf die Sonotrode 10, wobei im Bereich der Kontaktflächen eine Durchschmelzung der Trägerfolien unter Beibehaltung der Substanz der Vliesbahn erfolgt (vgl. Fig. 8). Damit sind die obere und die untere Vliesbahn 11 und 13 miteinander verbunden, ohne daß sich Löcher in der Materialbahn ergeben. Es lassen sich zwar scheinbar offene Bereiche 29 in den Schweißflächen 22 beobachten; diese sind jedoch von einer feinen, aus willkürlich gelegten Vliesfäden erhaltenen Netzstruktur verschlossen.

Die geschweißte Materialbahn 21 gelangt nunmehr an ein Nip-Rollenpaar 17, 17' und wird anschließend entspannt. Die Trägerfolie 13 zieht sich auf ihre ursprüngliche Länge zurück. Dabei formen sich Bausche 28, 28' auf der Ober- und Unterseite. Die vorher praktisch ungestreckte, obere Vliesfolie 11 bildet dabei höhere Bausche 28 als die gestreckt zugeführte Vliesfolie 12 (Bausch 28') (vgl. hierzu Figur 2).

Über weitere Umlenkrollen 18, 19 wird die fertige, entspannte Materialbahn auf eine Vorratsrolle 20 gewickelt.

Wie bereits angedeutet, wurde die Trägerfolie 13 mit einer Streckung 100 + a, die Vliesfolie 12 mit einer Streckung 100 + c und die Vliesfolie 11 praktisch ohne Streckung, nur beruhend auf der Zugspannung, d. h. mit einer Streckung 100 + b, zugeführt. Im vorliegenden Falle wäre demnach $b = 0 < c < a$. Es sei aber nicht ausgeschlossen, daß auch die Vliesfolie 11 mit einer gewissen Vorspannung eingeführt wird. Auch in diesem Falle bleibt es gemäß Erfindung bei der Abstufung

$$b < c < a.$$

Wird die erhaltene Materialbahn 21 gestreckt, bis die etwas kleineren Bausche 28' sich ebenfalls gestreckt haben (Figur 3), so verbleiben immer noch verkleinerte Bausche 28, so daß das ganze Material auch im gestreckten Zustand einen "fülligen" Eindruck bietet.

Figur 4 zeigt in Draufsicht eine fertige Laminat-Materialbahn. Gegenüber der Gesamtfläche nehmen die sehr kleinen Schweißflächen 22 nur eine geringe Fläche ein. Insgesamt liegt das Flächenverhältnis Schweißflächen zur Gesamtfläche etwa bei 1 zu 100.

Wie sich ferner in der Draufsicht zeigt, sind die "Frontlinien" 23, die von einer Reihe von Schweißflächen 22 quer zur Laufrichtung L der Gewebebahn gebildet werden, mit einem Winkel α, der von dem rechten Winkel abweicht, zur Laufrichtung angeordnet. Der Winkel α liegt etwa zwischen 1 und 5°, vorzugsweise 2,5°. Diese Schrägstellung hat sich als besonders vorteilhaft erwiesen, da sie bei hoher Arbeitsgeschwindigkeit die Faltenbildung der Materialbahnen praktisch völlig verhindert. Ein weiterer, nicht vorhersehbarer Vorteil ist, daß Resonanzerscheinungen im Bereich der Stachelwalze nicht mehr auftreten.

Ein wesentliches Element der Erfindung bildet die Ausbildung der Schweiß-Stachelwalze, die anhand der Figuren 5 bis 7 erläutert wird. Figur 6 zeigt einen kleinen Teil der Stachelwalzen-Peripherie in Draufsicht. Die Stachelwalze 15, die etwa einen Durchmesser von 250 mm hat, ist an ihrer Oberfläche, wie die Figur 6 ausweist, mit zahlreichen, in schräger Frontlinienanordnung liegenden Schweißstacheln 25 besetzt. Zur Verdeutlichung ist der Umriß der benachbart gegenüberliegenden Sonotrode 10 gestrichelt eingezeichnet. Die Unterseite der Sonotrode 10 bildet demnach ein zu der Frontlinienanordnung der Schweißstacheln leicht schief liegendes Rechteck. Eine ähnliche Sonotrode ist auf der anderen Seite der Walze angeordnet.

Bei den Schweißstacheln 25 handelt es sich, wie die Figuren 5 und 7 ausweisen, um kurze Kegelstümpfe mit etwa 0,8 mm Höhe und einem Böschungswinkel von 60°. An ihrer Spitze besitzen die Kegel eine parallel zur Peripherie-Rundung der Walze geschliffene, also ebenfalls gerundete, fast quadratische Schweißkontaktfläche 26 mit einer Fläche von ca. 0,25 mm$^2$. Der Abstand in Laufrichtung L liegt etwa bei 8 mm. Gegenseitig haben die Schweißstachel etwa einen Abstand von 3,46 mm.

Die gitterartige Anordnung der Schweißstachel 25 ist das genaue Spiegelbild der Anordnung der Schweißflächen 22 auf der Materialbahn 21, wie Figur 4 ausweist. Die in Figur 4 dargestellte Materialbahn wird von einem Teil der Stachelwalze 25 überrollt, wobei sich in einem Winkel α zur Laufrichtung liegende Reihen von offenen Bereichen 29 ergeben.

Es erweist sich, daß die Luftdurchlässigkeit bei dem bereits erwähnten Schweißflächenanteil von ca. 1 % Schweißfläche gegenüber der Gesamtfläche und 14 Schweißpunkten pro 50 mm Breite das Laminat im <u>gedehnten</u> Zustand von 200 l/m$^2$/s ist, wenn mit einem Druckunterschied von 2 mbar gemessen wird. Trotzdem ist die Verbundhaftung sehr hoch. Sie beträgt 4 N auf 50 mm$^2$.

Das Material selbst erscheint sehr feinporig. In Figur 8 ist dargestellt, daß eine Schweißfläche einen offenen Bereich 29 in der Materialbahn 21 ergibt, der praktisch eine Fensteröffnung darstellt (auch im gedehnten Zustand), die durch einen feinen Gaze-Schleier 30 verschlossen ist, der zwar die physiologisch erforderliche Ventilation ermöglicht, aber trotzdem soviel Luftwiderstand bietet, daß auch gestreckte Teilstücke der Materialbahn 21 mit Unterdruckgeräten manipulierbar bleiben. Dabei hat im ungestreckten Zustand das Vlies etwa eine Dicke von 0,1 bis 0,5 mm; die Materialbahn hat im ungestreckten Zustand etwa einen Dicke von 5 bis 15 mm.

Insgesamt bietet damit das Material sowohl herstellungsals auch verarbeitungstechnische Vorteile.

**Patentansprüche**

1. Verfahren zur Herstellung einer elastischen, mehrschichtigen Materialbahn (21), die aus einer flexiblen, elastischen Trägerfolie (13) aus einem thermoplastischen Elastomer und aus je einer auf der Ober- und Unterseite der Trägerfolie (13) wellenförmig befestigten Vliesbahn (11;12) besteht, wobei letztere miteinander verschweißt sind und die Schweißverbindugnen (22) über die Materialbahn (21) verteilt sind und gleichzeitig Bereiche erhöhter Luftdurchlässigkeit durch die Materialbahn (21) ergeben, mit folgenden Verfahrensschritten:

   a) Heranführen und Strecken der Trägerfolie (13) auf wenigstens (100+a) % der ungestreckten Länge,
   b) getrenntes Heranführen von zwei Vliesbahnen (11;12) und Zusammenführen zu einer Sandwich-Anordnung, die aus mittenliegender Trägerfolie (13) und außenliegenden Vliesbahnen (11;12) besteht,
   c) Verschweißen der Vliesbahnen (11;12) mit der Trägerfolie (13) mit Hilfe einer Schweißstacheln (25) tragenden Walze (15) als Teil einer Schweißstation (10),
   d) Entspannen der Trägerfolie (13) mit den aufgeschweißten Vliesbahnen (11;12) nach Verlassen der Schweißstation (10),

   gekennzeichnet durch Heranführen und Strecken der beiden Vliesbahnen (11;12) auf Maße (100+b) % bzw. (100+c) % unter Einhaltung folgender Ungleichung:

   $$b < c < a$$

   wobei der Unterschied der Streckungsmaße groß genug ist, um eine Wellenlage der Vliesbahn (11;12) zu erzeugen, und anschließende Durchführung der Schritte c) und d), wobei in Schritt c) gitterartig angeordnete Punktschweißflächen (22) gebildet werden.

2. Verfahren nach Anspruch 1, dadurch gekennzeichnet, daß die Streckung b = 0 ist, d. h. die erste Vliesbahn (11) ungestreckt der Schweißstation (10) zugeführt wird.

3. Verfahren nach Anspruch 1 oder 2, dadurch gekennzeichnet, daß die Streckung a zwischen 40 und 100 liegt.

4. Verfahren nach einem der vorhergehenden Ansprüche 1 bis 3, dadurch gekennzeichnet, daß die Streckung b zwischen 0 und 2 und die Streckung c zwischen 3 und 20 liegt.

5. Verfahren nach einem der vorhergehenden Ansprüche, dadurch gekennzeichnet, daß im Bereich der Punktschweißflächen (22) ein Durchschmelzen der Trägerfolie (13) unter Beibehaltung der Substanz der Vliesfolien (11; 12) erfolgt.

**6.** Verfahren nach einem der vorhergehenden Ansprüche, dadurch gekennzeichnet, daß die Summe der Schweißflächen (22) sich zur gestreckten Fläche der Trägerfolie (13) wie 0,5 bis 5 : 100 verhält.

**7.** Vorrichtung zur Durchführung des Verfahrens nach einem der Ansprüche 1 bis 6, mit Vorratsrollen (1; 2; 3), Reckwerken (6; 6') einer Schweißstation (10) und nachgeschalteten Aufnahmerollen (17; 18; 19; 20), bei der die Schweißstation (10) mit einer Schweißstacheln (25) tragenden Walze (15) und Gegendruckelement ausgestattet ist, über die die Bahn führbar ist, dadurch gekennzeichnet, daß die äußere Kontaktfläche (26) der Schweißstacheln (25) 0,5 bis 5 % der Gesamtperipheriefläche der Walze (15) ausmacht.

**8.** Vorrichtung nach Anspruch 7, dadurch gekennzeichnet, daß die Schweißstacheln (25) Kegelstümpfe darstellen.

**9.** Vorrichtung nach Anspruch 8, dadurch gekennzeichnet, daß der Kegel-Neigungswinkel zwischen 40 - 70°, vorzugsweise 60° beträgt.

**10.** Vorrichtung nach Anspruch 7 bis 8, dadurch gekennzeichnet, daß die äußere Kontaktfläche (26) der Schweißstachel (25) einen quadratischen, vorzugsweise im Eckbereich abgerundeten Umriß hat.

**11.** Vorrichtung nach einem der vorhergehenden Ansprüche 7 bis 10, dadurch gekennzeichnet, daß eine quer zur Laufrichtung (L) der Materialbahn (21) verlaufende Frontlinie (23) von Schweißstacheln (25) eine Abweichung von 1 bis 5° vom rechten Winkel hat und ein entsprechendes Bild auf der Materialbahn (21) erzeugt.

**12.** Vorrichtung nach einem der vorhergehenden Ansprüche, dadurch gekennzeichnet, daß die äußere, plane Kontaktfläche (26) eines Schweißstachels (25) eine Größe zwischen 0,2 bis 0,6 mm$^2$ hat.

**13.** Vorrichtung nach einem der vorhergehenden Ansprüche, dadurch gekennzeichnet, daß pro 10 cm Materialbahnbreite 15 - 40 Schweißstachel (25) in einer Frontlinie (23) liegen, vorzugsweise bei einer Breite von 50 mm zwischen 12 - 16 Schweißstachel (25).

**14.** Vorrichtung nach einem der vorhergehenden Ansprüche 11 bis 13, dadurch gekennzeichnet, daß der Abstand der Frontlinien (23) 7 - 10 mm beträgt.

**15.** Vorrichtung nach einem der vorhergehenden Ansprüche 11 bis 14, dadurch gekennzeichnet, daß die Schweißstachel (25) von Frontlinie (23) zu Frontlinie (23) gegeneinander versetzt angeordnet sind.

**Claims**

**1.** Process for producing an elastic, multilayer material web (21), which comprises a flexible, elastic carrier film (13) of a thermoplastic elastomer and nonwoven webs (11; 12) secured in a corrugated form respectively on the upper side and underside of the carrier film (13), said nonwoven webs being welded to each other and the weld connections (22) being distributed over the material web (21) and at the same time areas of increased air permeability through the material web (21) being provided, having the following process steps:

a) feeding and stretching the carrier film (13) up to at least (100 + a) % of the unstretched length,
b) separately feeding two nonwoven webs (11; 12) and bringing them together to form a sandwich arrangement which comprises the carrier film (13) in the middle and the nonwoven webs (11; 12) on the outside,
c) welding the nonwoven webs (11; 12) to the carrier film (13) with the aid of a cylinder (15) bearing welding pins (25) as part of a welding station (10),
d) relaxing the carrier film (13) with the welded-on non-woven webs (11; 12) after it leaves the welding station (10),

characterized by feeding and stretching the two nonwoven webs (11; 12) to extents of (100 + b) % and (100 + c) %, respectively, while maintaining the following inequality:

$$b < c < a$$

the difference between the extents of stretching being great enough to produce a corrugated lie of the nonwoven web [sic] (11; 12), and subsequently carrying out steps c) and d), spot-welding surfaces (22) arranged in the manner of a grid being formed in step c).

**2.** Process according to claim 1, characterized in that the stretching b = 0, i.e. the first nonwoven web (11) is fed unstretched to the welding station (10).

**3.** Process according to claim 1 or 2, characterized in that the stretching a lies between 40 and 100.

**4.** Process according to one of the preceding claims 1 to 3, characterized in that the stretching b lies between 0 and 2 and the stretching c lies between 3 and 20.

5. Process according to one of the preceding claims, characterized in that in the region of the spot-welding surfaces (22) there is carried out a melting-through of the carrier film (13) while retaining the substance of the nonwoven films (11; 12).

6. Process according to one of the preceding claims, characterized in that the ratio of the sum of the welding surfaces (22) to the stretched surface area of the carrier film (13) is 0.5 to 5 : 100.

7. Device for carrying out the process according to one of claims 1 to 6, having supply rollers (1; 2; 3), stretching units (6; 6'), a welding station (10) and downstream take-up rollers (17; 18; 19; 20), the welding station (10) being equipped with a cylinder (15) bearing welding pins (25) and with a counter-pressure element, over which the web can be guided, characterized in that the outer contact surface (26) of the welding pins (25) makes up 0.5 to 5 % of the overall peripheral surface area of the cylinder (15).

8. Device according to claim 7, characterized in that the welding pins (25) represent truncated cones.

9. Device according to claim 8, characterized in that the angle of cone slope is between 40 and 70°, preferably 60°.

10. Device according to claim 7 or 8, characterized in that the outer contact surface (26) of the welding pins (25) has a square outline, preferably rounded-off in the corner region.

11. Device according to one of the preceding claims 7 to 10, characterized in that a front line (23) of welding pins (25), which is transverse to the running direction (L) of the material web (21), has a deviation of 1 to 5° from a right angle and produces a corresponding image on the material web (21).

12. Device according to one of the preceding claims, characterized in that the outer, planar contact surface (26) of a welding pin (25) has a size between 0.2 and 0.6 mm$^2$.

13. Device according to one of the preceding claims, characterized in that in a front line (23) there lie 15 - 40 welding pins (25) per 10 cm of material web width, preferably between 12 and 16 welding pins (25) for a width of 50 mm.

14. Device according to one of the preceding claims 11 to 13, characterized in that the spacing of the front lines (23) is 7 - 10 mm.

15. Device according to one of the preceding claims 11 to 14, characterized in that the welding pins (25) from front line (23) to front line (23) are arranged offset with respect to one another.

**Revendications**

1. Procédé pour la fabrication d'une bande de matériau (21) élastique, à couches multiples, composée d'une feuille de support (13) flexible, élastique, en un élastomère thermoplastique et de deux bandes de non-tissé (11 ; 12) fixées sous forme ondulée respectivement sur le côté supérieur et le côté inférieur de la feuille de support (13), les couches étant soudées entre elles et les soudures (22) étant réparties sur la bande de matériau (21) et produisant simultanément des zones de perméabilité accrue à l'air à travers la bande de matériau (21), comprenant les étapes suivantes :

    a) amenée et étirage de la feuille de support (13) à au moins (100+a) % de la longueur à l'état non-étiré,
    b) amenée séparée de deux bandes de non-tissé (11 ; 12) et réunion en un agencement sandwich qui se compose de la feuille de support (13) en position médiane et des bandes de non-tissé (11 ; 12) en position extérieure,
    c) soudure des bandes de non-tissé (11 ; 12) avec la feuille de support (13) à l'aide d'un cylindre (15) portant des pointes de soudage (25), en tant que partie d'un poste de soudage (10),
    d) détente de la feuille de support (13) avec les bandes de non-tissé (11 ; 12) qui s'y trouvent fixées par soudure, après sortie du poste de soudage (10),

    **caractérisé** par l'amenée et l'étirage des deux bandes de non-tissé (11 ; 12) à (100+b) % et (100+c) %, respectivement, en respectant l'inégalité suivante :

$$b < c < a$$

la différence des degrés d'étirage étant suffisamment grande pour produire une ondulation d'une bande de non-tissé (11 ; 12), et la réalisation subséquente des étapes c) et d), des points de soudure (22) disposés en forme de réseau étant produits dans l'étape c).

2. Procédé suivant la revendication 1, **caractérisé** par le fait que l'étirage b = 0, c'est-à-dire que la première bande de non-tissé (11) est amenée à l'état non-étiré au poste de soudage (10).

3. Procédé suivant la revendication 1 ou 2, **caractérisé** par le fait que l'étirage a est compris entre 40 et 100.

4. Procédé suivant l'une des revendications 1 à 3, **caractérisé** par le fait que l'étirage b est compris entre 0 et 2 et l'étirage c entre 3 et 20.

5. Procédé suivant l'une des revendications précédentes, **caractérisé** par le fait que dans la zone des points de soudure (22), il se produit une fusion de la feuille de support (13), la substance des bandes de non-tissé (11 ; 12) restant conservée.

6. Procédé suivant l'une des revendications précédentes, **caractérisé** par le fait que le rapport de la somme des aires des soudures (22) par rapport à l'aire de la feuille de support (13) étirée est compris entre 0,5 et 5 : 100.

7. Dispositif pour la mise en oeuvre du procédé suivant l'une des revendications 1 à 6, comprenant des bobines de réserve (1 ; 2 ; 3), des systèmes d'étirage (6 ; 6'), un poste de soudage (10) et des bobines de réception (17 ; 18 ; 19 ; 20), le poste de soudage (10) étant équipé d'un cylindre (15) portant des pointes de soudage (25) et d'un élément de contrepression entre lesquels peut passer la bande, **caractérisé** par le fait que la surface de contact extérieure (26) des pointes de soudage (25) représente de 0,5 à 5 % de la surface périphérique totale du cylindre (15).

8. Dispositif suivant la revendication 7, **caractérisé** par le fait que les pointes de soudage (25) représentent des troncs de cône.

9. Dispositif suivant la revendication 8, **caractérisé** par le fait que l'angle de pente du cône est compris entre 40 et 70 % et s'élève de préférence à 60 %.

10. Dispositif suivant les revendications 7 et 8, **caractérisé** par le fait que la surface de contact extérieure (26) des pointes de soudage (25) présente un contour carré, de préférence arrondi dans la zone des angles.

11. Dispositif suivant l'une des revendications précédentes 7 à 10, **caractérisé** par le fait qu'une ligne frontale (23) de pointes de soudage (25) s'étendant transversalement à la direction d'avancement (L) de la bande de matériau (21) présente un écart de 1 à 5° par rapport à un angle droit et produit un réseau correspondant de soudures sur la bande de matériau (21).

12. Dispositif suivant l'une des revendications précédentes, **caractérisé** par le fait que la surface de contact plane extérieure (26) d'une pointe de soudage (25) présente une aire comprise entre 0,2 et 0,6 mm$^2$.

13. Dispositif suivant l'une des revendications précédentes, **caractérisé** par le fait que 15 à 40 pointes de soudage (25) sont situées sur une ligne frontale (23) pour une largeur de 10 cm de la bande de matériau et que de préférence de 12 à 16 pointes de soudage (25) sont situées sur une ligne frontale sur une largeur de 50 mm de bande de matériau.

14. Dispositif suivant l'une des revendications précédentes 11 à 13, **caractérisé** par le fait que la distance entre les lignes frontales (23) est comprise entre 7 et 10 mm.

15. Dispositif suivant l'une des revendications précédentes 11 à 14, **caractérisé** par le fait que les pointes de soudage (25) sont réciproquement décalées d'une ligne frontale (23) à la ligne frontale (23) suivante.

Fig.1

Fig.2

Fig.3

Fig.4

Fig.5

Fig.7

Fig.8

15

L

25

10

Fig.6